# EUROPEAN PATENT SPECIFICATION

(11) **EP 4 315 191 B1**
(45) Date of publication and mention of the grant of the patent: **13.05.2026**
(21) Application number: 22717599.9
(22) Date of filing: 24.03.2022
(51) Int. Cl.: G06N 99/00

(54) **INFORMATION PROCESSING APPARATUS**
INFORMATIONSVERARBEITUNGSVORRICHTUNG
APPAREIL DE TRAITEMENT D'INFORMATIONS

(30) Priority: 24.03.2021 EP 21164676
(43) Date of publication of application: 07.02.2024
(73) Proprietor: Johannes Gutenberg-Universität Mainz, 55122 Mainz (DE)
(72) Inventor: VIRNAU, Peter, 55457 Horrweiler (DE); KLÄUI, Mathias, 55122 Mainz (DE); BREMS, Maarten, 67549 Worms (DE)
(74) Representative: Durm Patentanwälte PartG mbB
(86) International application number: PCT/EP2022/057778
(87) International publication number: WO 2022/200504

(56) References cited:
- LEE JIA ET AL: "Brownian Circuits: Designs", OF UNCONVENTIONAL COMPUTING, 26 March 2016 (2016-03-26), pages 341 - 362, XP055838842, Retrieved from the Internet <URL:http://www.oldcitypublishing.com/wp-content/uploads/2016/11/IJUCv12n5-6p341-362Lee.pdf> [retrieved on 20210907]
- NOZAKI TAKAYUKI ET AL: "Brownian motion of skyrmion bubbles and its control by voltage applications", APPLIED PHYSICS LETTERS, A I P PUBLISHING LLC, US, vol. 114, no. 1, 4 January 2019 (2019-01-04), XP012234386, ISSN: 0003-6951, [retrieved on 20190104], DOI: 10.1063/1.5070101
- SANZ-HERN�NDEZ D�DALO ET AL: "Fabrication, Detection, and Operation of a Three-Dimensional Nanomagnetic Conduit", vol. 11, no. 11, 26 October 2017 (2017-10-26), US, pages 11066 - 11073, XP055838866, ISSN: 1936-0851, Retrieved from the Internet <URL:https://pubs.acs.org/doi/pdf/10.1021/acsnano.7b05105> [retrieved on 20210909], DOI: 10.1021/acsnano.7b05105
- BREMS MAARTEN A ET AL: "Circuits and excitations to enable Brownian token-based computing with skyrmions", 5 July 2021 (2021-07-05), pages 1 - 13, XP055837392, Retrieved from the Internet <URL:https://arxiv.org/ftp/arxiv/papers/2107/2107.02097.pdf> [retrieved on 20210902]
- LEE JIA ET AL: "Brownian Circuits: Designs", OF UNCONVENTIONAL COMPUTING, 26 March 2016 (2016-03-26), pages 341 - 362, XP055838842, Retrieved from the Internet <URL:http://www.oldcitypublishing.com/wp-content/uploads/2016/11/IJUCv12n5-6p341-362Lee.pdf> [retrieved on 20210907]
- NOZAKI TAKAYUKI ET AL: "Brownian motion of skyrmion bubbles and its control by voltage applications", APPLIED PHYSICS LETTERS, A I P PUBLISHING LLC, US, vol. 114, no. 1, 4 January 2019 (2019-01-04), XP012234386, ISSN: 0003-6951, [retrieved on 20190104], DOI: 10.1063/1.5070101
- SANZ-HERNÁNDEZ DÉDALO ET AL: "Fabrication, Detection, and Operation of a Three-Dimensional Nanomagnetic Conduit", vol. 11, no. 11, 26 October 2017 (2017-10-26), US, pages 11066 - 11073, XP055838866, ISSN: 1936-0851, Retrieved from the Internet <URL:https://pubs.acs.org/doi/pdf/10.1021/acsnano.7b05105> [retrieved on 20210909], DOI: 10.1021/acsnano.7b05105
- BREMS MAARTEN A ET AL: "Circuits and excitations to enable Brownian token-based computing with skyrmions", 5 July 2021 (2021-07-05), pages 1 - 13, XP055837392, Retrieved from the Internet <URL:https://arxiv.org/ftp/arxiv/papers/2107/2107.02097.pdf> [retrieved on 20210902]

## Description

The present invention relates to an apparatus for processing information by evaluating randomly moving tokens corresponding to particles or quasiparticles. The present invention further relates to microelectronic systems that require information processing, such as a sensor system for detecting a physical phenomenon in an environment.

Thermal fluctuations are increasingly relevant in modern digital electronic computers due to the ongoing miniaturization of computing devices. Scaling down the size of these devices and circuits the relevant energy scale for computing becomes comparable to the one of thermal fluctuations so that a deterministic behavior is no longer guaranteed. Traditional strategies to counter the effects of thermal fluctuations like noise suppression or error correction come at the price of larger devices, strong limitations to the computation speed and higher power consumption. Therefore, non-conventional computing schemes with novel methods to circumvent these problems have gained interest in recent years.

One approach in this respect is the so-called token-based computing. A token is a discrete signal carrier which moves through a circuit with special transition rules to perform a calculation. In Brownian computing this movement originates from the stochastic Brownian motion of particles or quasi particles due to thermal fluctuations. One advantage of this Brownian or token-based computing is the low power consumption. It becomes possible to process information even if only a very small amount of power is available. This is particularly interesting for application scenarios that rely on energy harvesting for self-sufficient operation. Potential scenarios include monitoring applications in which a sensor measures a quantity and acts upon a change in this quantity. For instance, a room climate monitoring could make use of such a processing apparatus.

A promising candidate for tokens are magnetic skyrmions. These topologically stabilized magnetic whirls exhibit quasi-particle behavior and have recently proven to exhibit thermal diffusion at room temperature.

In this context, Jibiki et al. "Skyrmion Brownian circuit implemented in continuous ferromagnetic thin film", 2019, relates to ultra-low power Brownian computers. In particular, a skyrmion Brownian circuit is disclosed that has been implemented in a continuous ferromagnetic film with a patterned SiO₂ capping to stabilize the skyrmion formation. The patterned SiO₂ capping controls the saturation field of the ferromagnetic layer and forms a wire-shaped skyrmion potential well, which stabilizes skyrmion formation in the circuit. Moreover, using this patterned SiO₂ capping, a Y-junction hub circuit is implemented exhibiting no significant pinning site at the junction, contrary to conventional etched hubs. An efficient control of skyrmion-based memory and logic devices to move closer toward the realization of Brownian computers is disclosed.

Lee et al. "Brownian Circuits: Designs", 2016, discusses Brownian circuits with decreased complexity and shows designs of circuits with functionalities like counting, testing of conditional statements, memory and arbitration of shared resources. Further, the potential of Brownian circuits for implementations by Single Electron Tunneling technology is discussed.

In Nozaki et al. "Brownian motion of skyrmion bubbles and its control by voltage applications", 2018 the dynamics of skyrmion bubbles in W/FeB/Ir/MgO structures are investigated with the aim of employing the thermally activated random walk of skyrmion bubbles for logical operations, i.e., token-based Brownian computing. In addition to the observation of Brownian motion of skyrmion bubbles, the electrical control of the diffusion constant by voltage applications is demonstrated. The developed technique would be useful for various kinds of skyrmion-based spintronic devices as well as Brownian computing.

In Sanz-Hernández et al. "Fabrication, Detection, and Operation of a Three-Dimensional Nanomagnetic Conduit", 2017, a 3D nanomagnetic system created by 3D nanoprinting and physical vapor deposition, which acts as a conduit for domain walls, is demonstrated. Domains formed at the substrate level are injected into a 3D nanowire, where they are controllably trapped using vectorial magnetic fields. A dark-field magneto-optical method for parallel, independent measurement of different regions in individual 3D nanostructures is also demonstrated.

One drawback of Brownian or token-based computing approaches is that the information processing depends on the movement of the particles or quasiparticles. On the one hand, this can lead to a slow processing, which impedes an application in areas that require a certain calculation speed. Even for rather simple circuits such as a half-adder, simulations show that mean calculation times can be on the order of several minutes for a single operation. On the other hand, the exploitation of thermal fluctuations and/or random movement makes the processing time non-deterministic. The non-deterministic calculation durations in combination with the long calculation times pose a challenge for the application of Brownian or token-based computing approaches in almost all application areas.

In view of the above, the present invention faces the challenge of enabling the application of token-based computing approaches in further application scenarios. In particular, the present invention faces the challenge of accelerating calculations in a token-based computing approach while avoiding excessive power consumption.

To solve this problem, one aspect of the present invention relates to an apparatus for processing information by evaluating randomly moving tokens corresponding to particles or quasiparticles, comprising:
- an input interface for receiving an input signal;
- a carrier for supporting a plurality of pathways for the randomly moving tokens and at least one join for connecting two pathways and for permitting a passing of a first token in a first pathway of the two connected pathways through the join upon presence of a second token from a second pathway of the two connected pathways in the join;
- an insertion unit for inserting tokens into the pathways based on the input signal;
- an excitation unit for applying a stimulus to a token in at least one pathway of the plurality of pathways, said stimulus acting to increase the random movement of the token in a direction substantially parallel to the carrier; and
- an output unit for providing an output signal based on a location of at least one token after a predefined or dynamically adjusted time period.

Another aspect of this invention relates to a sensor system for detecting a physical phenomenon in an environment, comprising:
- an apparatus as defined above; and
- a sensor for detecting the physical phenomenon and for generating the input signal based on the physical phenomenon.

Preferred embodiments of the invention are defined in the dependent claims. It shall be understood that the claimed apparatus and system have similar and/or identical preferred embodiments as the claimed apparatus and system, in particular as defined in the dependent claims and as disclosed herein.

The present invention is based on the idea that the random movement of the particles or quasiparticles representing the tokens in a token-based computing apparatus is stimulated by means of an excitation unit. An external and additional stimulus is applied that increases or induces the random movement of the tokens in a direction substantially parallel to the carrier. Thereby, processing can be accelerated.

Pathways in which particles or quasiparticles corresponding to tokens can randomly move are arranged on a carrier. Joins connecting the pathways only permit a passing of a token upon presence of another token. In particular, a join can be a so-called c-join. The pathways are connected and form a network that performs a desired computing operation. An input signal is received that includes the information to be processed. The input signal forms the basis for inserting tokens into the network. The movement of the tokens through the network and the functionality of at least one join results in a processing result. In other words, the location of the token after a processing time represents the result of the information processing. The additionally applied stimulus amplifies the movement. The movement is accelerated or, if the tokens initially do not show any movement due to environmental conditions for example, the movement of the tokens is increased by inducing the movement. In other words, the stimulation and the stimulated motion is independent of the thermal diffusion and can additionally be superimposed with (potentially also present) thermal diffusion. Preferably, the carrier is substantially planar or shaped in the form of a plane. The stimulation is applied parallel to this plane. The carrier can correspond to a substrate or other structure that holds the circuit formed by the pathways and the at least one join. In particular, the carrier can be composed of metals, insulators, semiconductors, ceramic, Teflon or polymers. The carrier does not necessarily need to be conductive. Depending on the material, the pathways and join can, e.g., be implemented by structuring or treating the material.

In comparison to previous approaches to token-based computing, the additionally applied stimulation results in a faster processing. It becomes possible to process information with a higher processing speed. That the stimulus is applied in a direction substantially parallel to the carrier allows for an energy efficient stimulation of the movement. In addition, it becomes possible to modify and/or adapt the stimulus according to predefined or continuously updated criteria. The stimulus can be applied to the entire network or to a part of the network.

In contrast to the concept of making use of ratchets as discussed in Lee et al. "Brownian Circuits:Designs", 2016, the excitation unit of the present invention is configured to apply a stimulus that acts to increase the random movement of a token. A ratchet corresponds to a component that is included at a specific position in a pathway and accelerates the movement of a passing token in a predefined direction. When a token passes, this token's movement is accelerated in the predefined direction of the specific ratchet. Thus, a ratchet does not increase the random movement but rather induces or supports a directed movement. Furthermore, a ratchet is usually implemented as a passive element that does not require an external energy supply. The effect of the excitation unit, on the other hand, is not limited to a specific position but increases the random movement of a token in a direction substantially parallel to the carrier without favoring a specific direction. For this, the excitation unit preferably corresponds to an active element that applies energy.

The sensor system of the invention allows for detecting a physical phenomenon in an environment. In particular, a parameter representing this physical phenomenon is measured. For instance, a light intensity, a temperature, a concentration of a gas etc. can be detected. The output signal of this sensor is evaluated by means of the apparatus of the invention. In particular, a passive sensor can be used that requires no external energy source. The apparatus of the present invention can also be operated at very limited power consumption. Thus, in comparison to previous sensor systems, this approach allows for a high energy efficiency.

In a preferred embodiment the apparatus is configured to evaluate particles or quasi particles exhibiting a Brownian diffusive motion as tokens. In particular, magnetic skyrmions can be used as tokens. Particles or quasiparticles exhibiting a Brownian diffusive motion are particles that show a random fluctuation in their position without requiring an external trigger for this motion. In particular, magnetic skyrmions can be used. These quasi particles show advantageous properties with respect to their movement and with respect to stimulation possibilities. An efficient stimulation can be obtained.

In a preferred embodiment the excitation unit includes a pulse unit for applying an electric current to the carrier and/or to at least one pathway of the plurality of pathways. The carrier preferably includes a layer of a conductive material enabling a spin torque effect, in particular a spin-orbit torque effect, to which the electric current is applied. The pulse unit makes it possible to connect an electric voltage to the carrier that results in an electric current flowing through the carrier. It is also possible that the electric voltage is applied to at least one pathway such that an electric current flows through this pathway. In order to provide the necessary electric conductivity, a conductive material can be used. If this conductive material is additionally susceptible to a spin torque effect or a spin-orbit torque effect, this leads to an energy-efficient stimulation of the movement of magnetic particles or quasiparticles. The random movement of the tokens is efficiently increased. An efficiently implementable option for stimulating the movement of the tokens is provided. In addition, an energy-efficient stimulation is obtained.

In a preferred embodiment the excitation unit includes a magnetic field unit for applying a magnetic field or magnetic field gradient to the carrier. This magnetic field unit preferably includes at least two coils arranged on different sides of the carrier. The magnetic field unit is preferably configured to generate magnetic fields that have components in at least two non-parallel directions. In particular, the generated magnetic fields can be perpendicular to one another. Different sides of the carrier thereby particularly refer to positions arranged in directions parallel to the (substantially planar) carrier. A magnetic field or magnetic field gradient is generated for stimulating the movement of the tokens. This magnetic field or magnetic field gradient particularly allows excitation of magnetic particles or quasi particles or particles or quasiparticles having magnetic properties. One efficient implementation of the magnetic field unit is the use of coils that are configured to induce the magnetic field or field gradient.

In a preferred embodiment the excitation unit includes an electric field unit for applying an electric field to the carrier. The carrier includes an electrically insulating layer for propagating the electric field. Preferably a layer of a high-K dielectric material can be used. The implementation of a unit for applying an electric field to the carrier requires little additional hardware. The electric field can particularly propagate through a specifically designed electrically insulating layer. This layer forms part of the carrier and preferably includes a high-K dielectric material. For instance, a layer of a material including hafnium silicate and/or hafnium oxide can be used. An energy-efficient excitation of tokens is realized.

In a preferred embodiment the excitation unit includes an electromagnetic field unit for generating a high-frequency electromagnetic field. This electromagnetic field unit preferably includes an antenna. It is additionally or alternatively possible to stimulate the tokens by means of a high-frequency electromagnetic field. This electromagnetic field can for instance be generated by means of one or more antennas. The antennas are preferably arranged in immediate spatial vicinity to the carrier. It is also possible that the antenna or the antennas are integrated in the carrier. The use of a high-frequency electromagnetic field has the advantage that a stimulation of tokens within a larger area on the carrier is efficiently implementable.

In a preferred embodiment the output unit includes a magnetic sensor for detecting a change in magnetization or in a magnetic field in an output position on the carrier. If magnetic particles/quasiparticles or particles/quasiparticles with magnetic properties are used, these can be detected by means of a magnetic sensor. This magnetic sensor allows for detecting the presence of a token in an output position. This output position corresponds to a position that the token can reach depending on the input signal, i.e. the positions at which the tokens were inserted. The use of a magnetic sensor allows a reliable detection of tokens in the output position at a low energy-consumption.

In a preferred embodiment the carrier includes a multi-layer thin film system arranged on a semiconductor wafer. The wafer preferably includes an insulating top layer. The thin film system preferably includes a magnetized material. The pathways and the at least one join are preferably manufactured in the multi-layer thin film system in an etching and/or lithography process. For manufacturing a multi-layer thin film system on a semiconductor wafer, existing manufacturing techniques can be applied. An efficient and effective manufacturing process can be obtained. In particular, a standard etching and/or lithography process can be used for manufacturing the pathways and joins in the multi-layer thin film system.

In a preferred embodiment the insertion unit includes a nucleation unit for nucleating a token in an input position connected to a pathway. In particular, a magnetic skyrmion can be nucleated. This nucleation thereby corresponds to the formation or generation of a particle or quasiparticle in the desired position on the carrier. A particle or quasiparticle is generated in the input position from which it then moves through the pathways and joins forming the network.

In a preferred embodiment the input interface is configured to receive the input signal from a sensor. In particular, the apparatus can be used for processing information measured by a sensor. For instance, a measurement signal can be processed in order to evaluate whether a predefined condition is met. Possible application areas include the monitoring of parameters such as illumination, gas concentration etc. The input is processed by means of the apparatus and it is, e.g., checked whether a certain condition is met. An energy-efficient monitoring of a parameter can be realized.

In a preferred embodiment the input interface is configured to receive a stimulus signal. The excitation unit is configured to apply the stimulus based on the stimulus signal. The excitation unit is preferably configured to adapt a strength of the stimulus based on the stimulus signal. In other words, it becomes possible to apply the stimulus upon request. If the additional acceleration provided by the excitation unit is required, a stimulus signal is applied. If no further acceleration of the processing is required or no energy is available, no stimulus is applied. The excitation unit is configured for being activated or deactivated upon request. By activating the excitation unit and by accelerating the random movement of the tokens, the processing is accelerated. Thus, it becomes possible to accelerate the processing if required. This control is implemented by means of the stimulus signal. It is also possible that the strength of the applied stimulus is adapted or controlled based on the stimulus signal. For instance, a stronger stimulus can be applied if a very fast processing is required. An optimization of the energy consumption of the apparatus depending on the application scenario is obtained.

In a preferred embodiment the excitation unit is configured to apply the stimulus based on an amount of energy in an energy supply connected to an energy harvesting unit for generating electric energy from an environment. In particular, it is advantageous to make use of a stimulus leading to an additional acceleration if additional energy is available. In an energy harvesting scenario, situations can occur in which more or less power is available. If power is available, the stimulus can be applied and the processing of information in the apparatus can be accelerated. If no power is available, no stimulus is applied and the processing runs at a lower speed.

In a preferred embodiment the sensor system includes an energy harvesting unit for generating electric energy from the environment. Energy can be harvested from heat, light or other effects. Usually, the energy harvesting unit is configured to harvest energy in all cases upon availability. This energy can then be used to apply the additional stimulus in the excitation unit of the apparatus of the invention.

Herein, a token corresponding to a particle or a quasiparticle can particularly be a magnetic skyrmion. However, also other particles/quasiparticles can be used, in particular colloids exhibiting a Brownian motion or being susceptible to movement through excitation via electrical or magnetic fields. Also, it could generally be possible to make use of the concept of the present invention based on defect electrons in semiconductors, phonons, magnons or excitons as tokens, even if these particles/quasiparticles do not exhibit Brownian motion. The apparatus of the present invention is suitable for processing information which particularly means that a digital signal can be processed and a calculation can be performed based on this digital signal. A sensor of the present invention can detect a physical phenomenon. A physical phenomenon can be any type of change in a real-world parameter. A physical phenomenon could, for instance, refer to an illumination, a gas concentration, a temperature, a distance of an object etc. This physical phenomenon can be measured by means of a sensor. The sensor particularly provides a signal that depends on this phenomenon. For instance, the signal can be proportional to the phenomenon. It is possible that the signal is an analog or a digital signal.

These and other aspects of the invention will be apparent from and elucidated with reference to the embodiment(s) described hereinafter. In the following drawings
- Figure 1: shows a schematic illustration of a sensor system according to the invention;
- Figure 2: shows a schematic illustration of an apparatus for processing information according to another aspect of the present invention;
- Figure 3: shows a schematic illustration of a network of pathways and joins;
- Figure 4: shows a schematic illustration of a carrier and an excitation unit having a pulse unit;
- Figure 5: shows a schematic illustration of an alternative implementation of a pulse unit;
- Figure 6: shows a schematic illustration of a carrier and an excitation unit having an electric field unit;
- Figure 7: shows a schematic illustration of a carrier and an excitation unit having a magnetic field unit;
- Figure 8: shows a schematic illustration of a carrier and an excitation unit having an electromagnetic field unit;
- Figures 9a and 9b: show a schematic illustration of two different arrangements of pathways and joins on a carrier; and
- Figure 10: shows a schematic illustration of another implementation of a half-adder.

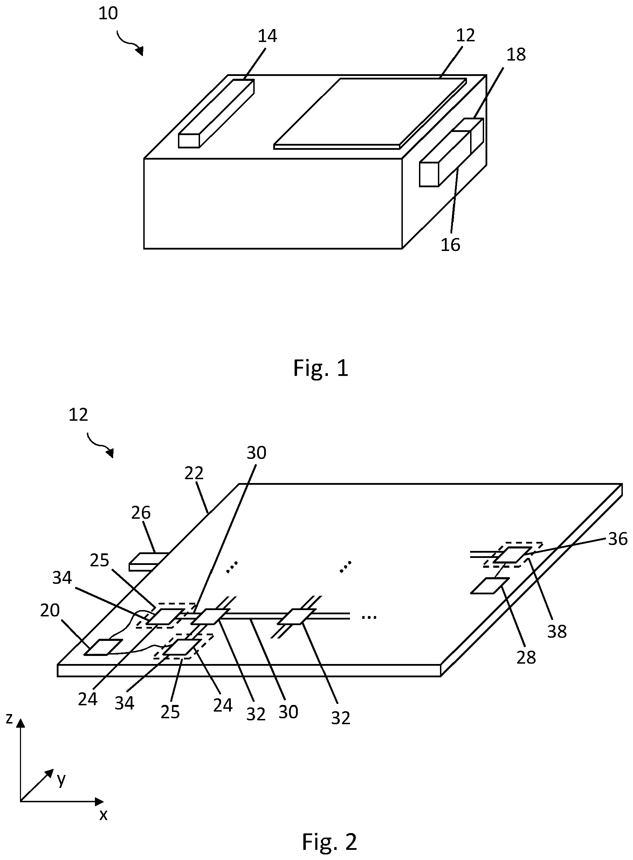

Figure 1 schematically illustrates a sensor system 10 for detecting a physical phenomenon in an environment. The sensor system 10 includes an apparatus 12 for processing information and a sensor 14 for generating the input signal based on the physical phenomenon. The sensor system 10 can, e.g., be used for monitoring a carbon dioxide concentration in a building. The apparatus 12 can process the input signal to provide an output signal that indicates whether or not the building needs to be evacuated due to an increasing carbon dioxide concentration. One requirement of these types of monitoring applications is a low energy consumption. In order to provide the desired functionality, the sensor system 10 further includes an energy harvesting unit 16 with an energy supply 18. For instance, a temperature gradient can be exploited by means of a Peltier element to charge a capacitor representing the energy supply 18.

Figure 2 schematically illustrates an apparatus 12 for processing information according to the invention. The apparatus 12 includes an input interface 20, a carrier 22, an insertion unit 24, an excitation unit 26 and an output unit 28. The apparatus 12 corresponds to a token-based or Brownian computing device in which randomly moving tokens corresponding to particles or quasi particles move through pathways 30 and joins 32 on the carrier 22 to carry out a calculation. The tokens move through the network. A join 32 is connected to two (or more) pathways 30. In particular a join 32 corresponds to a c-join connected to four pathways 30. A token that reaches a join 32 can only pass this join 32 if another token also reaches the join 32 from another pathway 30 while the token is present at the join 32. The layout of the network of pathways 30 and joins 32 allows carrying out calculation or information processing tasks.

It is to be understood that in the illustrated example the network of pathways 30 and joins 32 as well as the insertion unit 24 and output unit 28 are only schematically illustrated. The network is continued two-dimensionally on the carrier 22 as illustrated by the dots in Figure 2. The size of the network depends on the required calculations to be performed by the network or the apparatus, respectively. The network corresponds to a combinational logic or circuit (a network of logic gates) in which an output is processed in order to determine a corresponding input. A plurality of structures corresponding to logic gates are arranged on the carrier 22. Usually, also other components such as hubs and ratchets form part of the network in addition to pathways 30 and joins 32.

The use of randomly moving tokens allows a very energy-efficient implementation of a computing device. In particular, it is possible to make use of particles/quasiparticles exhibiting a Brownian motion that do not require any external energy input in order to move through the network of pathways 30 and joins 32. Preferably, only the joins 32 are active components requiring (a small amount of) external energy to perform their operation.

In particular, magnetic skyrmions can be used as tokens. The input interface 20 is configured to receive the input signal. The input signal thereby represents the information that is to be processed. In particular, a digital or analog signal can be received. The input interface can, e.g., correspond to a wired connection to a sensor or the like.

In the insertion unit 24 tokens are inserted into the pathways based on the content of the input signal. In particular, it is possible to nucleate a magnetic skyrmion in an input position 34 that is connected to a pathway 30 by means of a nucleation unit 25. The nucleation can thereby for instance be based on a field sweep or on an effective spin-polarized current in a defect. From the input position 34 the token can then move through the network of pathways 30 and joins 32.

The output unit 28 is configured to determine an output signal based on a location of at least one token after a predefined or dynamically adjusted time period. In particular, it is possible that it is determined whether or not a token is present in an output position 36 on the carrier 22. For instance, in the case of magnetic skyrmions as tokens, a change in magnetization or in a magnetic field in the output position 36 can be measured. This measurement can thereby be carried out periodically or in dynamically adjusted time intervals. Since the movement of the tokens through the network is based on random movements, the time for performing the calculations is non-deterministic. For instance, if a Brownian motion of particles is exploited, the calculation speed depends on the temperature as well as on other parameters. For instance, a magnetic sensor 38 can be used that is mounted below the carrier 22, as schematically illustrated by the dashed line. It is possible to directly detect the magnetic field of the skyrmions. Additionally or alternatively, it is possible to detect a magnetization, e.g., in a tunnel-magneto-resistance element or based on a magnetic microscopy, particularly by exploiting a magneto-optic Kerr effect.

The excitation unit 26 is configured to apply a stimulus to the tokens in the network of pathways 30 and joins 32. This stimulus acts to increase the random movement of the tokens in the network in a direction substantially parallel to the carrier 22 as illustrated in Figure 2. The carrier 22 is substantially planar. The excitation unit 26 increases the movement by accelerating or inducing the motion of the tokens in at least one of the x- and y-directions. By this stimulation, it becomes possible to realize a faster processing of information. The movement of the tokens through the network is accelerated. The tokens move faster through the network.

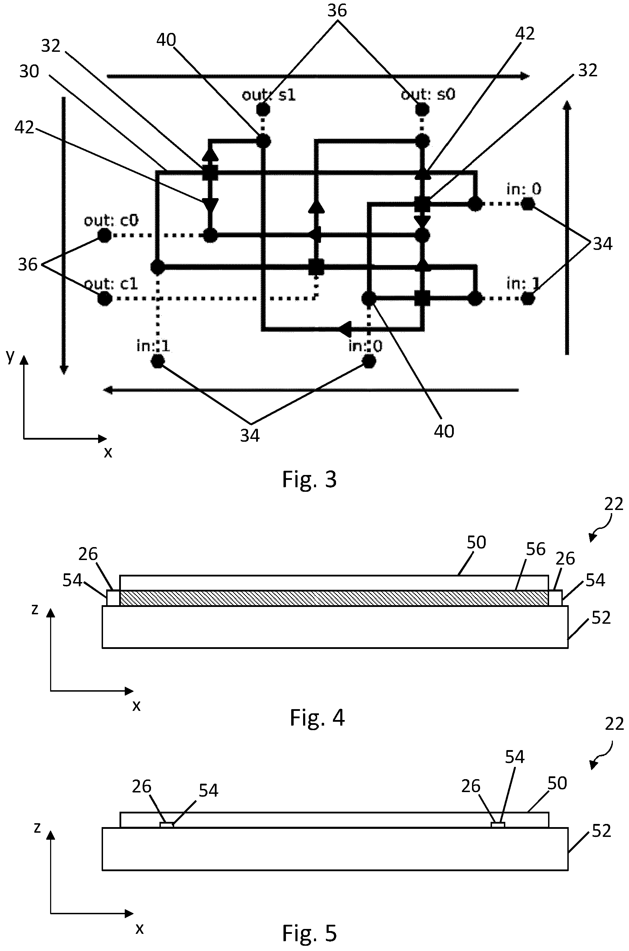

Figure 3 schematically illustrates an exemplary network of pathways 30 (lines) and joins 32 (squares, can also be referred to as c-joins). In particular, a half-adder functionality is illustrated. Two bits are added. In the example, the two bits are fed into the network via four input positions for tokens. The first two input positions 34 on the right side represent one bit. A token is inserted into one of the two input positions 34 on the right side if the bit is one (in:1) or if the bit is zero (in:0). The second bit is fed into the lower input positions 34 in the same manner. The pathways 30 and joins 32 connect the input positions 34 to output positions 36. Again, the output positions 36 on the left side represent a first bit of the output signal and the output positions 36 on the upper side represent a second bit of the output signal. The joins 32 provide the functionality of capturing a token for a predefined amount of time if the token enters the join. If, within this predefined time, another token originating from another pathway connected to the join 32 enters the join 32, then both tokens can pass the join 32. If no second token enters the join 32 in the predefined time period, the first token can leave the join in the entering direction.

In the illustrated example there exist also hubs 40 (circles) in the network that permit a movement of a token entering the hub in all connected pathways 30. Further, the illustrated network includes (optional) ratchets 42 (arrowheads) corresponding to components that accelerate the movement of a passing token in one direction. In other words, a ratchet 42 favors a certain direction of token movement.

As indicated in Figure 3, the stimulation is applied in a direction substantially parallel to the carrier. The four arrows in Figure 3 indicate the four different possible stimulation directions. Preferably, the stimulation is applied in directions that are parallel to the arrangement of the pathways on the carrier. Usually, the pathways are arranged in two orthogonal directions due to manufacturing efficiency (X-direction and Y-direction). The stimulation is then preferably also applied in these directions.

The stimulation of the movement of the tokens is thereby preferably carried out randomly. This means that the direction of a stimulation (parallel to the carrier) is randomly varied. For instance, it is possible that one stimulating pulse is applied in a first direction and then a second stimulating pulse is applied in another direction. Thereby, these stimulating pulses do not necessarily have to be equally strong. It is, however, preferred that the direction in which the tokens' movement is stimulated is arbitrarily chosen.

Figure 4 schematically illustrates one option for implementing the excitation unit 26. Thereby, Figure 4 shows a sectional view of the carrier 22. In the illustrated example, the carrier 22 includes a multi-layer thin film system 50 arranged on a semiconductor wafer 52. The pathways and the at least one join are implemented into the multi-layer thin film system 50.

This multi-layer thin film system 50 is preferably magnetic. One example for such a multi-layer thin film system is Ta(5)/Co₂₀Fe₆₀B₂₀(0.9)/Ta(0.08)/MgO(2)/Ta(5), wherein the thickness of the layer is indicated in nanometers in brackets. The semiconductor wafer 52 is preferably a silicon wafer having an oxidized surface corresponding to an insulating top layer.

One approach to manufacture the structures on the substrate (corresponding to walls that form the pathways) is the removal of the magnetic layer outside of the structure (etching). Another approach is to deposit material for geometrically forming the pathways. The structuring can then be realized via standard-lithography. For instance, an optical approach based on an electron beam or another lithography process can be used. Ratchets can, for example, be realized in the form of a triangle geometry. For the joins, vertically oriented electric fields can be used to locally control the diffusion of the tokens.

Figure 4 illustrates an embodiment in which the excitation unit 26 includes a pulse unit 54 for applying an electric current to the carrier 22. In particular, the electric pulse is applied to a layer of a conductive material 56 that enables a spin-torque effect. A current is injected into the conductive layer. This layer of conductive material 56 can particularly be implemented in the form of a continuous film of a heavy metal. For instance, tantalum, platinum or wolfram can be used. The structuring of the pathways and joins can then be applied onto this layer. If a current is injected into the layer of conductive material 56, this results in a stimulation of the movement of all tokens in all pathways, joins and other components.

Alternatively or additionally, it is also possible to inject a current into the pathways and/or in other elements in which the tokens are located as illustrated in Figure 5. The excitation unit 26 includes a pulse unit 54 that is connected to at least one of the pathways or other structures of the multi-layer thin film system 50 through which the tokens move on the carrier 22. This allows for performing an additional control on the stimulation. In particular, it becomes possible to increase the stimulation of the movement of tokens in selected pathways and joins exclusively, if desired.

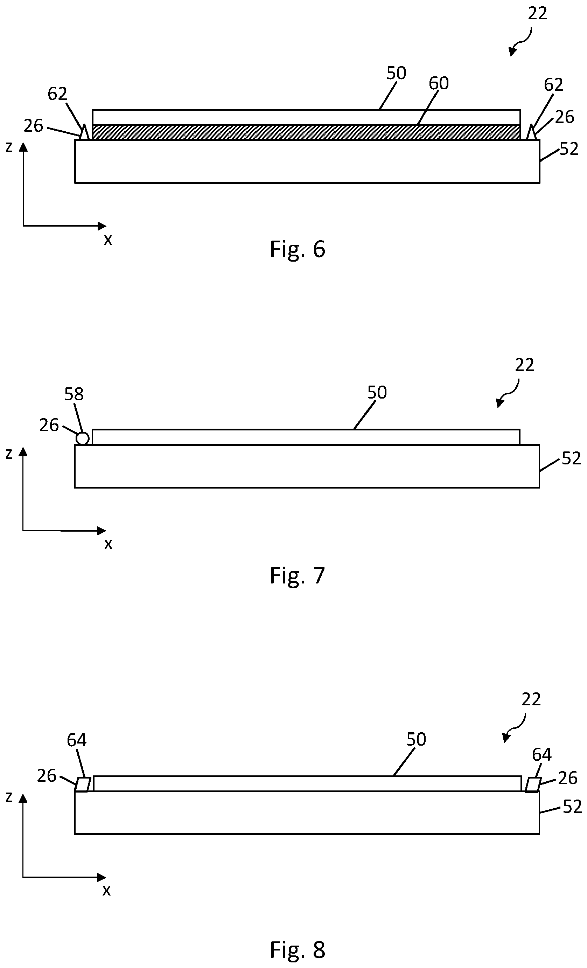

Figure 6 shows another example for the excitation unit 26. The excitation unit 26 includes an electric field unit 62 for applying an electric field to the carrier 22. In the illustrated example an (optional) electrically insulating layer 60 for propagating an electric field forms part of the carrier 22 and is arranged on the semiconductor wafer 52. This electrically insulating layer 60 preferably includes a high-K dielectric material. The electric field can thereby particularly be applied based on electrodes that are arranged on two laterally opposing sides of the carrier 22 or the multi-layer thin film system 50. The electric field unit 62 including the electrodes is configured to generate an electric field in a plane parallel to the carrier 22. In comparison to the application of an electric current, the application of an electric field does not lead to a current flow.

Figure 7 shows a schematic illustration of another example for the excitation unit 26. The carrier 22 includes a semiconductor wafer 52 as well as a multi-layer thin film system 50 in which the pathways, joins and other structures are implemented. The excitation unit 26 includes a magnetic field unit 58 for applying a magnetic field or a magnetic field gradient to the carrier 22. A magnetic field can, e.g., be generated by making use of local coils or strip lines that are deposited on the substrate. By adapting the geometries of the coils, it becomes possible to generate a magnetic field gradient. In particular, the magnetic field unit 58 can include two coils. Thereby, the coils are preferably arranged on different sides of the carrier 22 but not aligned with one another (i.e. non-parallel magnetic fields are generated). In particular, the coils can be arranged to generate magnetic fields or field gradients that are oriented perpendicular to one another.

Figure 8 shows yet another example for the excitation unit 26. The excitation unit 26 includes an electromagnetic field unit 64 for generating a high-frequency electromagnetic field. Thereby, the multi-layer thin film system 50 is again arranged directly on the semiconductor wafer 52 without an additional functional layer in between. The movement of the tokens is increased based on a high-frequency alternating field generated by the electromagnetic field unit 64. Thereby, it is possible to stimulate the movement of the tokens based on the magnetic field component or the electric field component.

It is to be understood that the different options for the application of the stimulus and the implementation of the excitation unit 26 illustrated in Figures 4 to 8 can also be combined. A combination can allow a better control of the stimulation and an adaption to specific requirements.

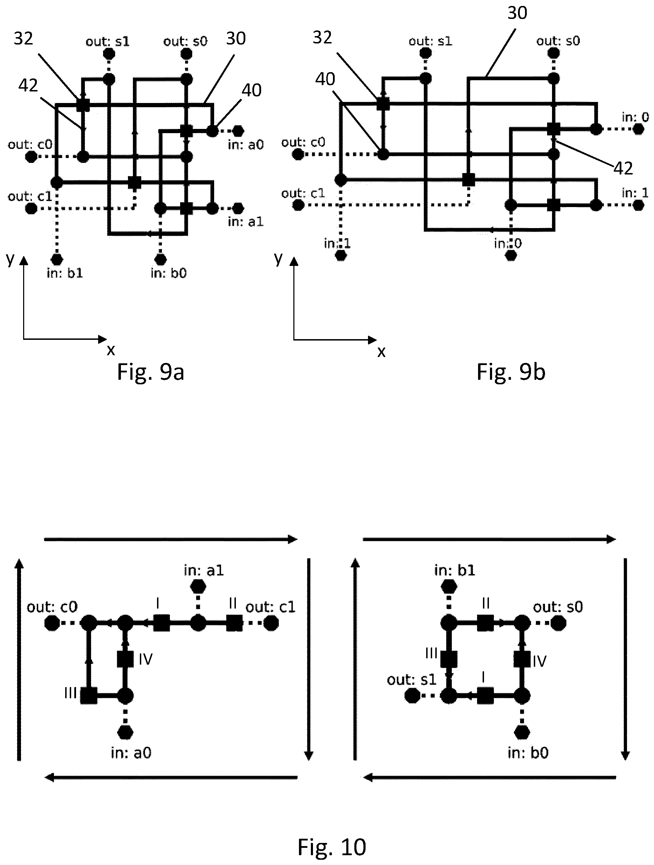

Figures 9a and 9b schematically illustrate two layouts of a half-adder realized based on multiple pathways 30 and joins 32 (cf. Figure 3). Both Figures thereby show the same layout with different lengths of the pathways 30 in x-direction.

As outlined above, the stimulus is randomly applied. In particular, the movement of the tokens in the network is stimulated in a randomly varying direction (substantially parallel to the carrier). For the illustrated layout with pathways that are either oriented in x-direction or in y-direction, the stimulation is preferably applied in one of the four left/right/up/down directions (+/- x- and +/- y-direction in the Figure). However, the probability for stimulation in each direction does not necessarily need to be identical. In particular, the probability for stimulation in a left/right/up/down direction does not necessarily have to be 25%/25%/25%/25%, but can also deviate from this equal distribution, for instance 20%/22%/30%/28%. The calculation is then still carried out correctly albeit the increase in speed of the calculation is potentially reduced in comparison to an equal distribution. However, the implementation of the stimulation can be facilitated if not all directions necessarily need to be absolutely equal.

Furthermore, it might even be helpful for particular layouts to adapt the application of the stimulus dependent on the layout. As illustrated in Figures 9a and 9b, the length of all pathways in left/right direction (x-direction) is twice as big in Figure 9b in comparison with Figure 9a. Since for carrying out a calculation the distance in this left/right direction is higher, it could be possible and helpful to adapt the stimulation probabilities for this direction, for instance by choosing 33%/33%/17%/17% for left/right/up/down.

Figure 10 schematically shows another layout of a half-adder that does not require crossing pathways and could thus allow for an easier implementation. The network includes pathways (lines), joins (squares), ratchets (arrowheads) and hubs (circles). On the left side of Figure 10, the first bit of the input is calculated. On the right side, the second bit is calculated. In the illustrated crossing-free layout, every two joins having the same roman numerals on the left and right side are connected to one another (e.g. by a strip line) and communicate with one another to perform the function of the join. In other words, each two squares having the same roman numeral together perform the function of a single join.

The present invention as described herein can be applied, for example, to a system as discussed in Raab et al., "Brownian reservoir computing using geometrically confined skyrmions", 2022, preprint available under https://download.klaeui-lab.de/skyrmion-reservoir-computing/ (Ref. 1 in the following).

In particular, in a corresponding embodiment of the apparatus of the present invention the circuit on the carrier including the plurality of pathways and the at least one join can include a single join connecting at least two, preferably three, pathways supported by the carrier. The width of the pathways can be substantially larger than the diameter of a randomly moving token. As a consequence, the pathways can be overlapping. Moreover, the at least one output unit can be located within the join for connecting pathways or within the essentially overlapping pathways.

The device from Ref. 1 relies on two distinct types of movement of the token in the direction substantially parallel to the carrier for operation. First, movement due to biasing potentials, which can be preferably applied at the ends of the pathways connected by the join as in Ref. 1. Biasing potentials are not to be confused with an excitation unit as described in claim 1 as the biasing potentials induce directed movement and not random movement. Second, random movement of a token which, in Ref. 1, is realized by thermal diffusion. This device operates as a token moves influenced by the biasing potentials and thereby the probability for the presence of a token in the different pathways connected by the join is altered depending on the biasing potentials. In consequence, the probability for the presence of a token at the output unit(s) is altered depending on the biasing potentials and a relation between biasing potentials and output(s) exists.

The random movement of the tokens is required for two reasons. First, random movement is required for the token to explore different pathways connected by the join. As discussed in the supplementary material of Ref. 1, a lack of random movement introduces ambiguity in the relation between output(s) and biasing potentials and therefore hinders reliable operation of the device. Second, random movement of the token is employed as a reset mechanism to reset the probability for the token to be present in the different pathways and therefore the output unit(s) when the biasing potentials itself are changed.

The present invention can be applied to the above setup in particular by employing an excitation unit for applying a stimulus to a token in at least one pathway to increase the random movement of the token in a direction substantially parallel to the carrier. Thereby, the operation speed of the device can be increased. Moreover, random movement due to the excitation unit allows the device to operated even when thermal diffusion is insufficient to provide at least one the two required functionalities discussed above.

Thus, the foregoing discussion discloses and describes merely exemplary embodiments of the present disclosure. As will be understood by those skilled in the art, the present disclosure may be embodied in other forms. Accordingly, the description is intended to be illustrative, but not limiting the scope of the claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Further, such software may also be distributed in other forms, such as via the Internet or other wired or wireless telecommunication systems. A method may particularly be carried out to control the operation of a software defined radio.

### List of reference numerals

- 10: sensor system
- 12: apparatus
- 14: sensor
- 16: energy harvesting unit
- 18: energy supply
- 20: input interface
- 22: carrier
- 24: insertion unit
- 25: nucleation unit
- 26: excitation unit
- 28: output unit
- 30: pathway
- 32: join
- 34: input position
- 36: output position
- 38: magnetic sensor
- 40: hub
- 42: ratchet
- 50: multi-layer thin film system
- 52: semiconductor wafer
- 54: pulse unit
- 56: layer of conductive material
- 58: magnetic field unit
- 60: electrically insulating layer
- 62: electric field unit
- 64: electromagnetic field unit

## Claims

1. Apparatus (12) for processing information by evaluating randomly moving tokens corresponding to particles or quasi particles, comprising:
an input interface (20) for receiving an input signal;
a carrier (22) for supporting a plurality of pathways (30) for the randomly moving tokens and at least one join (32) for connecting two pathways and for permitting a passing of a first token in a first pathway of the two connected pathways through the join upon presence of a second token from a second pathway of the two connected pathways in the join;
an insertion unit (24) for inserting tokens into the pathways based on the input signal;
an excitation unit (26) for applying a stimulus to a token in at least one pathway of the plurality of pathways, said stimulus acting to increase the random movement of the token in a direction substantially parallel to the carrier; and
an output unit (28) for providing an output signal based on a location of at least one token after a predefined or dynamically adjusted time period.

2. Apparatus (12) as claimed in claim 1, wherein the apparatus is configured to evaluate particles or quasi particles exhibiting a Brownian diffusive motion as tokens, in particular magnetic skyrmions.

3. Apparatus (12) as claimed in any one of the preceding claims, wherein
the excitation unit (26) includes a pulse unit (54) for applying an electric current to the carrier (22) and/or to at least one pathway of the plurality of pathways (30); and
the carrier preferably includes a layer of a conductive material (56) enabling a spin torque effect, in particular a spin-orbit torque effect, to which the electric current is applied.

4. Apparatus (12) as claimed in any one of the preceding claims, wherein
the excitation unit (26) includes a magnetic field unit (58) for applying a magnetic field or magnetic field gradient to the carrier (22); and
said magnetic field unit preferably includes at least two coils arranged on different sides of the carrier.

5. Apparatus (12) as claimed in any one of the preceding claims, wherein
the excitation unit (26) includes an electric field unit (62) for applying an electric field to the carrier (22); and
the carrier includes an electrically insulating layer (60) for propagating the electric field, preferably a layer of a high-k dielectric material.

6. Apparatus (12) as claimed in any one of the preceding claims, wherein
the excitation unit (26) includes an electromagnetic field unit (64) for generating a high-frequency electromagnetic field; and
said electromagnetic field unit preferably includes an antenna.

7. Apparatus (12) as claimed in any one of the preceding claims, wherein the output unit (28) includes a magnetic sensor (38) for detecting a change in magnetization or in a magnetic field in an output position (36) on the carrier (22).

8. Apparatus (12) as claimed in any one of the preceding claims, wherein the output unit (28) is configured to periodically determine whether a token is in an output position (36) on the carrier (22).

9. Apparatus (12) as claimed in any one of the preceding claims, wherein
the carrier (22) includes a multi-layer thin film system (50) arranged on a semiconductor wafer (52), said wafer preferably including an insulating top layer, said thin film system preferably including a magnetized material; and
the pathways (30) and the at least one join (32) are preferably manufactured in the multi-layer thin film system in an etching and/or lithography process.

10. Apparatus (12) as claimed in any one of the preceding claims, wherein the insertion unit (24) includes a nucleation unit (25) for nucleating a token in an input position (34) connected to a pathway (30).

11. Apparatus (12) as claimed in any one of the preceding claims, wherein the input interface (20) is configured to receive the input signal from a sensor (14).

12. Apparatus (12) as claimed in any one of the preceding claims, wherein
the input interface (20) is configured to receive a stimulus signal;
the excitation unit (26) is configured to apply the stimulus based on the stimulus signal; and
the excitation unit is preferably configured to adapt a strength of the stimulus based on the stimulus signal.

13. Apparatus (12) as claimed in any one of the preceding claims, wherein the excitation unit (26) is configured to apply the stimulus based on an amount of energy in an energy supply (18) connected to an energy harvesting unit (16) for generating electric energy from an environment.

14. Sensor system (10) for detecting a physical phenomenon in an environment, comprising:
an apparatus (12) as defined in any one of the preceding claims; and
a sensor (14) for generating the input signal based on the physical phenomenon in the environment.

15. Sensor system (10) as claimed in claim 14 including an energy harvesting unit (16) for generating electric energy from the environment.

## Patentansprüche

1. Vorrichtung (12) zur Verarbeitung von Informationen durch Auswertung zufällig bewegter Token, die Teilchen oder Quasiteilchen entsprechen, umfassend:
eine Eingabeschnittstelle (20) zum Empfangen eines Eingangssignals;
einen Träger (22) zum Tragen einer Vielzahl von Pfaden (30) für die zufällig bewegten Token und mindestens einer Verbindungsstelle (32) zum Verbinden zweier Pfade und zum Ermöglichen eines Durchtritts eines ersten Tokens in einem ersten Pfad der zwei verbundenen Pfade durch die Verbindungsstelle bei Anwesenheit eines zweiten Tokens aus einem zweiten Pfad der zwei verbundenen Pfade in der Verbindungsstelle;
eine Einfügeeinheit (24) zum Einfügen von Token in die Pfade basierend auf dem Eingangssignal;
eine Anregungseinheit (26) zum Anlegen eines Stimulus an ein Token in mindestens einem Pfad der Vielzahl von Pfaden, wobei der Stimulus dazu wirkt, die zufällige Bewegung des Tokens in einer im Wesentlichen parallel zum Träger verlaufenden Richtung zu erhöhen; und
eine Ausgabeeinheit (28) zum Bereitstellen eines Ausgangssignals basierend auf einer Position von mindestens einem Token nach einer vordefinierten oder dynamisch angepassten Zeitdauer.

2. Vorrichtung (12) nach Anspruch 1, wobei die Vorrichtung dazu ausgebildet ist, Teilchen oder Quasiteilchen mit einer Brownschen Diffusionsbewegung als Token auszuwerten, insbesondere magnetische Skyrmionen.

3. Vorrichtung (12) nach einem der vorhergehenden Ansprüche, wobei
die Anregungseinheit (26) eine Pulseinheit (54) zum Anlegen eines elektrischen Stroms an den Träger (22) und/oder an mindestens einen Pfad der Vielzahl von Pfaden (30) umfasst; und
der Träger vorzugsweise eine Schicht eines leitfähigen Materials (56) umfasst, die einen Spin-Torque-Effekt, insbesondere einen Spin-Orbit-Torque-Effekt, ermöglicht, auf den der elektrische Strom angelegt wird.

4. Vorrichtung (12) nach einem der vorhergehenden Ansprüche, wobei
die Anregungseinheit (26) eine Magnetfeldeinheit (58) zum Anlegen eines Magnetfelds oder eines Magnetfeldgradienten an den Träger (22) umfasst; und
die Magnetfeldeinheit vorzugsweise mindestens zwei auf unterschiedlichen Seiten des Trägers angeordnete Spulen umfasst.

5. Vorrichtung (12) nach einem der vorhergehenden Ansprüche, wobei
die Anregungseinheit (26) eine elektrische Feldeinheit (62) zum Anlegen eines elektrischen Felds an den Träger (22) umfasst; und
der Träger eine elektrisch isolierende Schicht (60) zum Weiterleiten des elektrischen Felds umfasst, vorzugsweise eine Schicht eines Dielektrikums mit hoher Permittivität.

6. Vorrichtung (12) nach einem der vorhergehenden Ansprüche, wobei
die Anregungseinheit (26) eine elektromagnetische Feldeinheit (64) zum Erzeugen eines hochfrequenten elektromagnetischen Felds umfasst; und
die elektromagnetische Feldeinheit vorzugsweise eine Antenne umfasst.

7. Vorrichtung (12) nach einem der vorhergehenden Ansprüche, wobei die Ausgabeeinheit (28) einen magnetischen Sensor (38) zum Erfassen einer Änderung der Magnetisierung oder eines Magnetfelds an einer Ausgabeposition (36) auf dem Träger (22) umfasst.

8. Vorrichtung (12) nach einem der vorhergehenden Ansprüche, wobei die Ausgabeeinheit (28) dazu ausgebildet ist, periodisch zu bestimmen, ob sich ein Token an einer Ausgabeposition (36) auf dem Träger (22) befindet.

9. Vorrichtung (12) nach einem der vorhergehenden Ansprüche, wobei
der Träger (22) ein Mehrschicht-Dünnfilmsystem (50) umfasst, das auf einem Halbleiterwafer (52) angeordnet ist, wobei der Wafer vorzugsweise eine isolierende Deckschicht umfasst und das Dünnfilmsystem vorzugsweise ein magnetisiertes Material umfasst; und
die Pfade (30) und die wenigstens eine Verbindungsstelle (32) vorzugsweise in dem Mehrschicht-Dünnfilmsystem durch ein Ätz- und/oder Lithographieverfahren hergestellt sind.

10. Vorrichtung (12) nach einem der vorhergehenden Ansprüche, wobei die Einfügeeinheit (24) eine Nukleationseinheit (25) zum Nukleieren eines Tokens in einer Eingabeposition (34) umfasst, die mit einem Pfad (30) verbunden ist.

11. Vorrichtung (12) nach einem der vorhergehenden Ansprüche, wobei die Eingabeschnittstelle (20) dazu ausgebildet ist, das Eingangssignal von einem Sensor (14) zu empfangen.

12. Vorrichtung (12) nach einem der vorhergehenden Ansprüche, wobei
die Eingabeschnittstelle (20) dazu ausgebildet ist, ein Stimulus-Signal zu empfangen;
die Anregungseinheit (26) dazu ausgebildet ist, den Stimulus basierend auf dem Stimulus-Signal anzulegen; und
die Anregungseinheit vorzugsweise dazu ausgebildet ist, eine Stärke des Stimulus basierend auf dem Stimulus-Signal anzupassen.

13. Vorrichtung (12) nach einem der vorhergehenden Ansprüche, wobei die Anregungseinheit (26) dazu ausgebildet ist, den Stimulus basierend auf einer verfügbaren Energie in einer Energieversorgung (18) anzulegen, die mit einer Energiegewinnungseinheit (16) zum Erzeugen elektrischer Energie aus der Umgebung verbunden ist.

14. Sensorsystem (10) zum Erfassen eines physikalischen Phänomens in einer Umgebung, umfassend:
eine Vorrichtung (12) nach einem der vorhergehenden Ansprüche; und
einen Sensor (14) zum Erzeugen des Eingangssignals basierend auf dem physikalischen Phänomen in der Umgebung.

15. Sensorsystem (10) nach Anspruch 14, umfassend eine Energiegewinnungseinheit (16) zum Erzeugen elektrischer Energie aus der Umgebung.

## Revendications

1. Appareil (12) pour traiter des informations par évaluation de jetons se déplaçant aléatoirement correspondant à des particules ou des quasi-particules, comprenant :
une interface d'entrée (20) pour recevoir un signal d'entrée ;
un support (22) pour supporter une pluralité de chemins (30) pour les jetons se déplaçant aléatoirement et au moins une jonction (32) pour connecter deux chemins et pour permettre un passage d'un premier jeton dans un premier chemin des deux chemins connectés à travers la jonction lors de la présence d'un second jeton provenant d'un second chemin des deux chemins connectés dans la jonction ;
une unité d'insertion (24) pour insérer des jetons dans les chemins sur la base du signal d'entrée ;
une unité d'excitation (26) pour appliquer un stimulus à un jeton dans au moins un chemin de la pluralité de chemins, ledit stimulus agissant pour augmenter le mouvement aléatoire du jeton dans une direction sensiblement parallèle au support ; et
une unité de sortie (28) pour fournir un signal de sortie sur la base d'une position d'au moins un jeton après une période de temps prédéfinie ou ajustée dynamiquement.

2. Appareil (12) selon la revendication 1, dans lequel l'appareil est configuré pour évaluer des particules ou des quasi-particules présentant un mouvement diffusif brownien en tant que jetons, en particulier des skyrmions magnétiques.

3. Appareil (12) selon l'une quelconque des revendications précédentes, dans lequel
l'unité d'excitation (26) comprend une unité d'impulsion (54) pour appliquer un courant électrique au support (22) et/ou à au moins un chemin de la pluralité de chemins (30) ; et
le support comprend de préférence une couche d'un matériau conducteur (56) permettant un effet de couple de spin, en particulier un effet de couple spin-orbite, auquel le courant électrique est appliqué.

4. Appareil (12) selon l'une quelconque des revendications précédentes, dans lequel
l'unité d'excitation (26) comprend une unité de champ magnétique (58) pour appliquer un champ magnétique ou un gradient de champ magnétique au support (22) ; et
ladite unité de champ magnétique comprend de préférence au moins deux bobines disposées sur des côtés différents du support.

5. Appareil (12) selon l'une quelconque des revendications précédentes, dans lequel
l'unité d'excitation (26) comprend une unité de champ électrique (62) pour appliquer un champ électrique au support (22) ; et
le support comprend une couche électriquement isolante (60) pour propager le champ électrique, de préférence une couche d'un matériau diélectrique à haute constante diélectrique.

6. Appareil (12) selon l'une quelconque des revendications précédentes, dans lequel
l'unité d'excitation (26) comprend une unité de champ électromagnétique (64) pour générer un champ électromagnétique à haute fréquence ; et
ladite unité de champ électromagnétique comprend de préférence une antenne.

7. Appareil (12) selon l'une quelconque des revendications précédentes, dans lequel l'unité de sortie (28) comprend un capteur magnétique (38) pour détecter un changement de magnétisation ou de champ magnétique dans une position de sortie (36) sur le support (22).

8. Appareil (12) selon l'une quelconque des revendications précédentes, dans lequel l'unité de sortie (28) est configurée pour déterminer périodiquement si un jeton se trouve dans une position de sortie (36) sur le support (22).

9. Appareil (12) selon l'une quelconque des revendications précédentes, dans lequel
le support (22) comprend un système de film mince multicouche (50) disposé sur une plaquette de semi-conducteur (52), ladite plaquette comprenant de préférence une couche supérieure isolante, ledit système de film mince comprenant de préférence un matériau magnétisé ; et
les chemins (30) et la au moins une jonction (32) sont de préférence fabriqués dans le système de film mince multicouche par un procédé de gravure et/ou de lithographie.

10. Appareil (12) selon l'une quelconque des revendications précédentes, dans lequel l'unité d'insertion (24) comprend une unité de nucléation (25) pour nucléer un jeton dans une position d'entrée (34) connectée à un chemin (30).

11. Appareil (12) selon l'une quelconque des revendications précédentes, dans lequel l'interface d'entrée (20) est configurée pour recevoir le signal d'entrée provenant d'un capteur (14).

12. Appareil (12) selon l'une quelconque des revendications précédentes, dans lequel
l'interface d'entrée (20) est configurée pour recevoir un signal de stimulus ;
l'unité d'excitation (26) est configurée pour appliquer le stimulus sur la base du signal de stimulus ; et
l'unité d'excitation est de préférence configurée pour adapter une intensité du stimulus sur la base du signal de stimulus.

13. Appareil (12) selon l'une quelconque des revendications précédentes, dans lequel l'unité d'excitation (26) est configurée pour appliquer le stimulus sur la base d'une quantité d'énergie dans une alimentation en énergie (18) connectée à une unité de récupération d'énergie (16) pour générer de l'énergie électrique à partir d'un environnement.

14. Système de capteur (10) pour détecter un phénomène physique dans un environnement, comprenant :
un appareil (12) tel que défini dans l'une quelconque des revendications précédentes ; et
un capteur (14) pour générer le signal d'entrée sur la base du phénomène physique dans l'environnement.

15. Système de capteur (10) selon la revendication 14 comprenant une unité de récupération d'énergie (16) pour générer de l'énergie électrique à partir de l'environnement.
